# EUROPEAN PATENT APPLICATION

(11) **EP 4 700 674 A1**
(43) Date of publication of application: **25.02.2026**
(21) Application number: 25194063.1
(22) Date of filing: 05.08.2025
(51) Int. Cl.: G06Q 10/08, G06Q 10/0833, G06Q 10/087, G06T 7/20, G06T 9/20, G06V 20/52, G08B 13/24, H04N 23/90, H04W 4/029

(54) **SYSTEM FOR MONITORING CARGO**

(30) Priority: 20.08.2024 US 202463684939 P; 27.06.2025 US 202519252561
(71) Applicant: The Boeing Company, Arlington, VA 22202 (US)
(72) Inventor: BEAJOW, Gabriel Fayez, ARLINGTON, 22202 (US); EAMES, Patrick Jan, ARLINGTON, 22202 (US); GARABEDIAN, Thomas Edwin, ARLINGTON, 22202 (US); SALSBERY, Gregory, ARLINGTON, 22202 (US); GALVAN, Aron Adoney, ARLINGTON, 22202 (US); FROST, Cedar, ARLINGTON, 22202 (US); ANSTEY, Timothy William, ARLINGTON, 22202 (US); MANOSKE, Taylor Jay, ARLINGTON, 22202 (US); MCALINDEN, Darroll John, ARLINGTON, 22202 (US); AYYAGARI, Arun, ARLINGTON, 22202 (US); PIRAMANAYAGAM, Ravishankar, ARLINGTON, 22202 (US); MUTHUKUMAR, Praveen Singaram, ARLINGTON, 22202 (US); TRAN, Khai The, ARLINGTON, 22202 (US)
(74) Representative: Plasseraud IP

(57) **Abstract**

Systems and method of tracking cargo. The tracking system includes a wireless system with tags configured to be connected to the cargo and to emit identification data, and locators configured to be connected to the vehicle and receive the identification data emitted from the tags. A vision system includes cameras positioned in the vehicle and configured to capture images of the cargo. A control unit includes processing circuitry configured to identify the cargo and track a position of the cargo based on signals transmitted from the tags and received by the locators and track the position of the cargo based on the images captured by the vision system.

## Description

### RELATED APPLICATIONS

This application claims priority to U.S. Provisional Serial No. 63/684,939, filed on August 20, 2024.

### TECHNOLOGICAL FIELD

The present disclosure relates generally to the field of cargo handling and, more specifically, to a system that uses both a wireless system and a vision system to identify cargo and monitor the movement of the cargo.

### BACKGROUND

A wide variety of vehicles are used to transport cargo. Examples include but are not limited to aircraft, ocean going vessels, and trucks. The transport process generally includes loading the cargo onto the vehicle, positioning the cargo in the vehicle, transporting the cargo from a first location to a second location, and then unloading the cargo. There is a need to identify and monitor the cargo during the transport process.

Existing systems provide various manners of identifying the cargo that is loaded onto a vehicle. However, these systems are often not accurate because they are not able to identify the cargo during handling, are not able to accurately monitor the location of the cargo during handling, and/or are not able to determine the position of the cargo on the vehicle. This can result in the cargo being misidentified and/or improperly loaded onto the vehicle. In some instances such as for aircraft, improperly loaded aircraft requires that the cargo be unloaded and then reloaded in the correct position prior to flight to ensure that the weight is properly balanced.

Some existing systems require an operator to visually inspect and identify the cargo. However, the visual identification of the cargo has been found to be inaccurate as operators are often unable to accurately identify the cargo or fail to properly input the cargo identification into monitoring software. Further, this can be expensive as it requires one or more operators to identify and enter the identification into the monitoring software. This process can also be time-consuming which slows the loading process and can lead to delays in the transport.

### SUMMARY

One aspect is directed to a method of tracking cargo as per the appended claims.

One aspect is directed to a cargo tracking system as per the appended claims.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is a schematic diagram of an example of a cargo tracking system that includes a wireless system and a vision system.
Figure 2 is an isometric view of an example of an aircraft equipped with an example of a cargo tracking system.
Figure 3 is an isometric view of an example cargo being loaded through an opening into a cargo hold of a vehicle.
Figure 4 is a schematic diagram of an example cargo hold that includes an alignment area and lanes that extend along the length.
Figure 5 is a schematic diagram of an example cargo hold that includes lanes that extend along the length.
Figure 6 is a schematic diagram of an example control unit that receives signals from locators and tags and is configured to output the calculated information.
Figure 7 is a flowchart diagram of an example method of identifying and tracking cargo.
Figure 8 is a flowchart diagram of an example method of identifying and tracking cargo.
Figure 9 is a flowchart diagram of an example method of identifying and tracking cargo.
Figure 10 is a schematic diagram of an example control unit.

### DETAILED DESCRIPTION

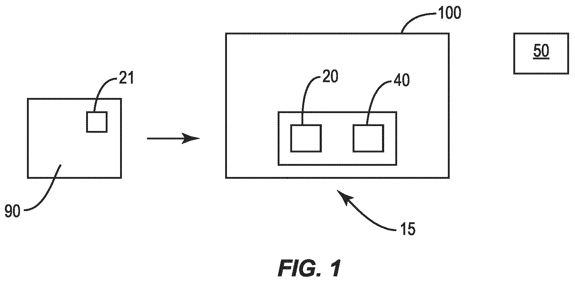

The present disclosure is directed to a cargo tracking system that identifies the cargo and tracks the position of cargo including determining the final position of the cargo on the vehicle. In some examples, the final position can be the position within a cargo hold of a vehicle or a position within a warehouse. As illustrated in Figure 1, the cargo tracking system 15 includes a wireless system 20 and a vision system 40. The wireless system 20 is configured to identify the cargo 90 based on a tag 21 configured to be connected to the cargo 90. The tag 21 also enables the wireless system 20 to track the location of the cargo 90. The vision system 40 visually tracks the position of the cargo 90 such as during handling during loading and unloading. The vision system 40 determines an accurate position of where the cargo 90 is located, such as the location where the cargo 90 is positioned within a cargo hold during transport. A control unit 50 identifies the cargo 90 and determines the position based on the identification data and/or images. In some examples, the wireless system 20 identifies the cargo 90 and determines the rough location of the cargo 90. Once the rough location is known, the vision system 40 more accurately tracks the position of the cargo 90. The wireless system 20 and the vision system 40 can work in series and/or in parallel. In some examples, the vision system enables accurate positioning with a precision of less than 2m. In some examples, the vision system enables accurate positioning with a precision of less than 1m. In some examples, the vision system enables accurate positioning with a precision of less than 50cm. In some examples, the vision system enables accurate positioning with a precision of less than 20cm. In some examples, the vision system enables accurate positioning with a precision of less than 10cm.

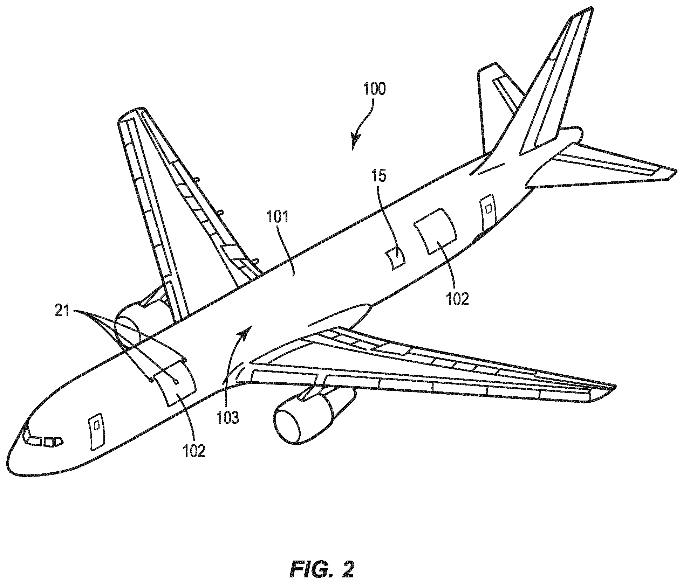

Figure 2 illustrates one application of the cargo tracking system 15 for cargo that is transported by a vehicle 100. In this example, the vehicle 100 is an aircraft configured to transport the cargo 90. The vehicle 100 generally includes a fuselage 101 with one or more doors 102 that lead to a cargo hold 103 within the interior of the fuselage 101. The cargo hold 103 includes a floor, ceiling, and side walls and is configured to hold the cargo 90 during transport. The cargo tracking system 15 is integrated with the vehicle 100 and configured to identify and track the location of the cargo 90 that is onboard the vehicle 100.

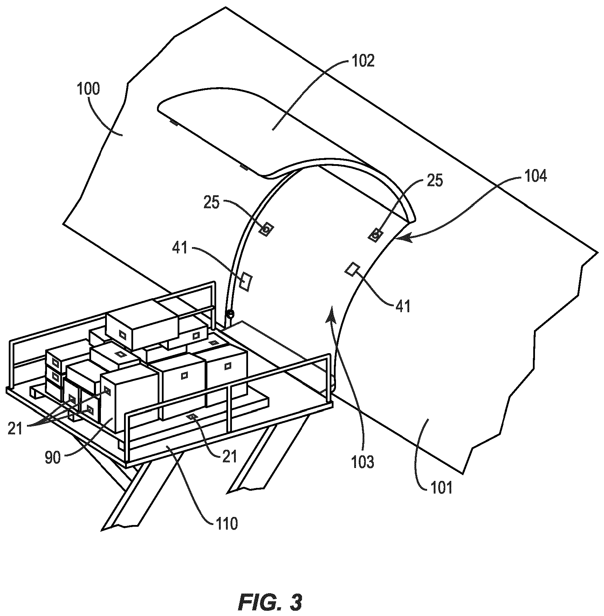

Figure 3 illustrates cargo 90 positioned on a platform 110 for loading into the vehicle 100. The door 102 in the vehicle fuselage 101 is in an open position for the cargo 90 to be moved through the opening 104 and into the cargo hold 103. The cargo 90 can be unloaded in a similar manner with the cargo 90 from the cargo hold 103 being removed through the opening 104 and loaded onto the platform 110.

The cargo 90 can have various shapes and sizes. In one example, cargo 90 includes a unit load device (ULD). The ULD can include different configurations with examples including but not limited to a pallet that supports smaller packages and a container used to hold the contents on wide-body and specific narrow-body aircraft and is shaped and sized to conform to the dimensions of the cargo hold 103. In another example, the cargo 90 includes smaller containers (e.g., boxes, crates) that are positioned on a pallet and held together with wrapping material (e.g., mesh, plastic wrapping material). Figure 3 illustrates an example with tags 21 connected to the pallet as well as one or more of the individual packages that are positioned on the pallet.

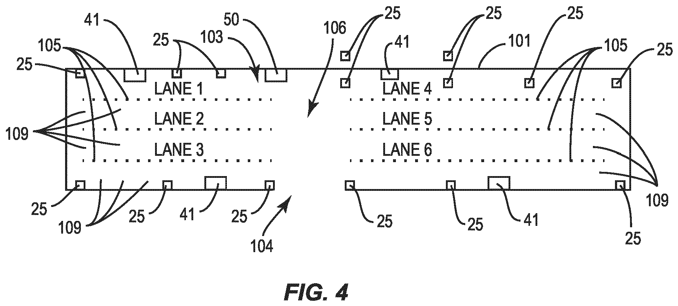

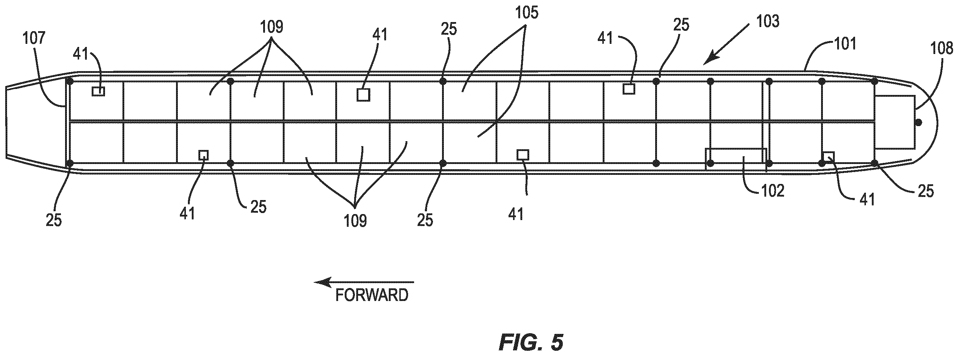

During loading, the cargo is moved through the door 102 and into the cargo hold 103. Figure 4 illustrates the cargo hold 103 and the opening 104 in the fuselage 101 where the cargo 90 is loaded onto the vehicle 100. The cargo hold 103 includes an alignment area 106 inward from the opening 104. The alignment area 106 provides for aligning the cargo 90 along one of the lanes 105 that extends along the length of the cargo hold 103. During loading, the cargo 90 is moved into the alignment area 106, aligned with one of the lanes 105, and then moved down the selected lane 105. The lanes 105 are divided along the length into bays 109 each sized to hold one or more pieces of cargo 90. The cargo 90 is moved along the lane 105 to one of the bays 109. In some example, this includes moving the cargo 90 along a lane 105 until reaches the end of the lane 105 or it reaches other cargo 90 that is already loaded in the lane 105. Figure 4 includes an example in which the cargo hold 103 includes six lanes 105 with Figure 5 including an example with two lanes 105. The layouts can include various numbers of lanes 105 extending along the cargo hold 103.

In some examples, the cargo 90 has an assigned position within the cargo hold 103, such as at a particular bay 109 of a particular lane 105. In some examples, the cargo 90 is loaded onto the vehicle 100 according to a Loading Instruction Report (LIR). The LIR is used by operators loading the vehicle 100 and provides instructions where to load and position the cargo 90 on the vehicle 100 to comply with weight and balance limits. In some examples, the assigned position is determined to distribute the weight of the cargo 90. When the vehicle 100 is an aircraft, the weight distribution is important to balance the aircraft to ensure a safe flight. In another example in which the vehicle is an ocean-going vessel, the weight distribution prevents the vehicle 100 remains stable on the water and reduces the risk of capsizing or swaying uncontrollably. The assigned position also facilitates loading and unloading of the cargo 90 as the lane arrangement of the cargo hold 103 uses a First In - Last Out (FILO) loading order. Accessing a particular piece of cargo 90 requires moving the other cargo 90 positioned inward along the corresponding lane 105 (i.e., positioned between the desired cargo 90 and the opening 104. The assigned position of the cargo 90 is also important to monitor the exposure during transport. One or more environmental factors (e.g., temperature, humidity) are monitored in the cargo hold 103 and can be used to determine the exposure of cargo 90.

The wireless system 20 includes identification tags 21 and locators 25. The tags 21 emits unique identifying data that is configured to be picked up by the locators 25. In some examples, the tags 21 are powered by batteries to emit the identifying information that is detected by the locators 25.

The tags 21 are configured to be attached to the cargo 90 with each piece of cargo 90 having a separate tag 21. The tags 21 can be attached to the cargo 90 in various manners, including but not limited to one or more fasteners, adhesive, and wire. In one example, the cargo 90 is equipped with a receptacle that receives the tag 21. The tags 21 include identification data that identifies the cargo 90. In some examples, the data includes an alphanumeric code such as a serial number that identifies the cargo 90. Additionally or alternatively, the data 90 includes other identifying information and/or information, including but not limited to a written description, the owner of the cargo, destination, and cargo identification (e.g., a cargo ID code).

The locators 25 are configured to receive the identification data from the tags 21. The locators 25 are positioned to be within proximity to the cargo 90 to enable the identification data to be read as the cargo 90 passes by the locator 25. In some examples, the locators 25 are configured to be mounted to the vehicle 100. Additionally or alternatively, the locators 25 are configured to be mounted in proximity to the vehicle 100, such as on a stand or mount for positioning near an opening 104 where the cargo 90 is loaded and unloaded.

In some examples as illustrated in Figures 3 and 4, one or more locators 25 are positioned at the opening 104 of the cargo hold 103. This positioning enables the wireless system 20 to identify and locate the cargo 90 prior to and/or as the cargo 90 is being loaded onto the vehicle 100. Locators 25 are also positioned along the cargo hold 103. As illustrated in Figures 4 and 5, the locators 25 are spaced apart along the lengths of the lanes 105.

The control unit 50 receives the data from the locators 25 and identifies and determines the position of the cargo 90. The control unit 50 can be located at various positions, including at the cargo hold 103, within the vehicle 100, and at a remote location offboard the vehicle 100. In some examples, the control unit 50 is dedicated to the cargo tracking system 15. In other examples, the control unit 50 is a component of another data processing system of the vehicle 100.

The cargo tracking system 15 can use different technologies to identify and track the cargo 90. In some examples, the cargo tracking system 15 uses Bluetooth Low Energy (BLE). The tags 21 are hardware transmitters that broadcast the identification data. The locators 25 are configured to receive the identification data from the tags 21. In some examples, multiple locators 25 are positioned on the vehicle 100 and arranged to receive the identification data. With multiple locators 25 positioned in the cargo hold 103, trilateration or multilateration is used to determine the position of the cargo 90. The locators 25 receive signals from the tags 21 and determine a Received Signal Strength Indicator (RSSI). The RSSI is determined based on a known signal strength at a known distance and the signal strength of the received signal from the tag 21. The RSSI is transmitted to the control unit 50 which uses the strength values from multiple different locators 25 (e.g., trilateration for three different locators; multilateration for four or more locators) to determine the location of the tag 21.

In other examples, the control unit 50 uses a Stigmergic approach that uses an intensity map to estimate the location of the tag 21.

Other networking protocols can be used by the wireless system 20 to identify and track the position. Examples of wireless networking protocols including but are not limited to ZIGBEE and Wi-Fi. Each of these protocols enable communications between the tags 21 and the locators 25 to transfer the identification data. Calculations using signal strength are used to determine the position of the cargo 90. Other examples use an RFID wireless system in which the locators 25 emit radio waves and receive signals back from the RFID tags 21.

The cargo tracking system 15 includes the vision system 40 to track the position of the cargo 90. The vision system 40 includes electro-optical sensors 41 positioned on the vehicle 100 to capture images of the cargo 90. The following disclosure will include the electro-optical sensors 41 being cameras, although other types of electro-optical sensors can be used to capture images of the cargo 90.

The cameras 41 are configured to capture individual discrete images of the cargo 90 and/or video of the cargo 90. The cameras 41 are configured to capture two-dimensional and/or three-dimensional images. In some examples, the cameras 41 include a fixed field of view. This provides for sequences of images to be captured that include the cargo 90 moving across the field of view. For example, a first image in the sequence captures the cargo 90 at a first side of the image, a second image captures the cargo 90 at a center of the image, and a third image captures the cargo 90 on an opposing second side of the field of view.

In some examples, the cameras 41 each have an independent field of view that is different than any other camera 41. In other examples, the cameras 41 are arranged with overlapping fields of view. This facilitates tracking the movement of the cargo 90 as it moves within the cargo hold 103 and through the different fields of view of the different cameras 41.

The cameras 41 are mounted to the vehicle 100 at various known locations, including on one or more of the door 102, on the fuselage wall at the opening 104, and within the cargo hold 103. In some examples, the cameras 41 are positioned at elevated positions, particulary within the cargo hold 103 to prevent and/or reduce the cargo 90 from blocking the camera 41. Specific examples include positioning the cameras 41 in the ceiling of the cargo hold 103 or along the sidewalls spaced upward from the floor (e.g., 75 inches above the floor).

Figure 5 illustrates one network of cameras 41 positioned between a forward end 107 and an aft end 108 of the cargo hold 103. In this example, six cameras 41 are positioned along the length of the cargo hold 103. The cameras 41 are spaced apart along the lanes 105 and at different bays 109 along the lanes 105. In some examples, the cameras 41 are spaced apart along the lanes 105 with the largest gap between cameras 41 being about five bays 109. This enables the different cameras 41 to capture images in the same areas in the event one or more of the cameras 41 are blocked by the cargo 90.

The cameras 41 can face in various directions to cover the cargo hold 103. In some examples, the cameras 41 that are spaced away from the forward end 107 face forward. In another example, the cameras 41 spaced away from the aft end 108 face rearward.

In some examples, the cameras 41 stream at a minimum frame rate of 2 Hz or more. This speed ensures that transition events with the cargo 90 are not missed in the images. In other examples, the rate is one image per second when Real-Time Streaming Protocol (RTSP) streaming is used to emulate live stream scenarios. This setup is devoid of any significant frame latencies between the different camera streams and thus has a less chance of missing a transition event with the cargo 90.

The control unit 50 uses the images to track the position of the cargo 90. In some examples, the control unit 50 determines a particular point on the cargo 90 which is used to track the position. This point provides for the cargo 90 to be tracked in the different images, such as when the cargo 90 moves through the field of view of multiple cameras 41. For example, the control unit 50 determines and tracks the position of a centroid of the cargo 90. Centroid tracking can use various methods, including but not limited to K-means clustering. Other examples include selecting a different point on the cargo 90, such as but not limited to a corner, a point on a top edge, and a point on a bottom edge (e.g., a center of the bottom edge).

In some examples, the control unit 50 determines the position of the cargo 90 using background subtraction. One process includes static background subtraction that uses a background image as a reference to detect changes in pixel values. Another process uses dynamic background subtraction that uses a dynamically selected background image as a reference from which a current image is compared for changes in pixel value.

One example of tracking the location of the cargo 90 includes building a motion detector using dynamic background subtraction, area filtering small moving objects out (e.g., people), and then tracking the remaining pixels on which there is motion detected. The location of the cargo 90 is determined using the output of the background subtraction to cluster the detection into an object when the sum of the detected pixels is large enough. A K-means clustering algorithm is then used to find the centroid of the cargo 90. When the centroid enters a specific region of interest correlating to a cargo position, then the cargo 90 is marked as being in that position from the perspective of the camera viewing it in that position. In some examples, the process includes a camera voting system in which images from multiple cameras 41 are analyzed to determine if they include the cargo 90 in a particular position. Generally, the camera 41 in the opposite lane 105 of the cargo 90 that is moving in has a better field of view of the cargo.

Another example of tracking cargo 90 includes leading edge detection. This approach uses a combination of static and dynamic computer vision techniques to determine active areas of the cargo hold 103 from a given video feed. In some examples, the approach uses birds-eye view transformation to convert 3D images into a 2D top view. This approach uses both a static approach and a dynamic approach, and then determines between one of the approaches. The static approach uses a subtraction from a static background image to determine a ground shift. If the amount of pixel difference exceeds a threshold, the approach assumes that a cargo 90 is present. The dynamic approach uses a dynamic background subtraction to just extract the moving parts of the video and performs Canny Edge detection logic to determine the contours of the moving object. The approach then detects the presence of the cargo 90 by searching for a leading edge of the cargo within the contour. The approach also determines between the static and dynamic and determines that cargo is present when a leading edge is detected in an area within a short period before the static background subtraction also flags an object presence. The algorithm also clears the previous detection if the static background subtraction flags no object presence while there is no leading edge detected within a short window before. In some examples, heuristic/debounce logic is applied to handle hysteresis conditions.

Another approach to tracking the cargo 90 is static background subtraction in Hue, Saturation, and Value (HSV) space. This approach uses static computer vision techniques to determine the active areas of the cargo hold 103 from a pre-recorded video feed. This approach uses a birds-eye view transformation to convert the 3D image into a 2D top-down view. This has several advantages, including simplifying the selected region of interest, and enables the application of region of interest crops. In some examples, this approach uses static background subtraction to determine the ground shift. This approach operates in HSV color space to handle lighting intensity differences. Static regions of interest are mapped onto the floor which count how many pixels have changed in comparison to the reference background image to determine if an object is occupying an area. Objects that are too small to be cargo are filtered out. A kernel erosion technique was used to reduce the noise floor of static background subtraction to account for minor pixel-level differences caused by vibration and resulting light reflection changes. Further, arbitrator logic was updated to track the state transitions to accurately infer cargo positions in areas when they are not directly in field of view of a camera. Each of the statuses are recorded in JSON and the camera and locator data were fused together.

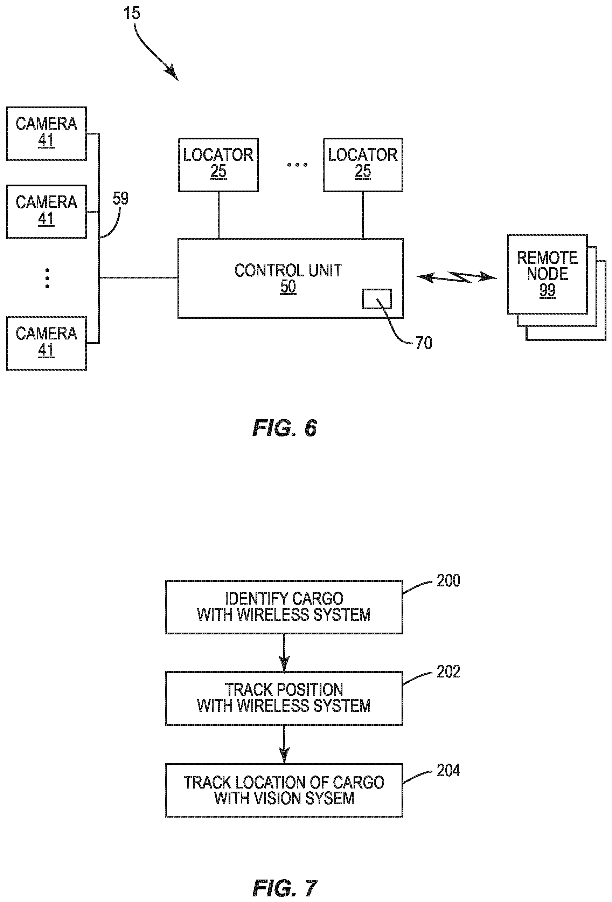

Figure 6 illustrates a schematic diagram of a cargo tracking system 15 that includes the control unit 50 that receives data from the locators 25 and cameras 41. The different components can communicate individually to the control unit 50, or through one or more data buses 59. The locators 25 and cameras 41 can be powered in various manners, including but not limited to power over Ethernet, batteries, and various other wireless and wired structures.

In some examples, the cargo tracking system 15 is integrated with the vehicle 100. The control unit 50 is a stand-alone device that provides just for monitoring the cargo 90 or can be part of another system on the vehicle 100 such as a flight control computer that oversees the operation of the vehicle 100. In some examples, the control unit 50 is located remotely from the vehicle 100. One example includes the control unit 50 being a remote server that receives signal information from the locators 25 and images from the cameras 41 and processes the vision data.

The control unit 50 is further configured to transmit cargo information to remote nodes 99. The remote nodes 99 are located on the ground or in airborne vehicles and have an interest in the cargo 90. Examples include but are not limited to an airline operating the vehicle 100, a shipping company responsible for transporting the cargo 90, and an owner of the cargo 90. In some examples, the control unit 50 maintains a record 70 of the position of the cargo 90 in the vehicle 100. The record 70 includes the lane 105 and the bay 109 where the cargo 90 is positioned in the cargo hold 103. In some examples, the entire record 70 is communicated to the remote nodes 99. In other examples, discrete information from the record 70 is communicated to the remote nodes 99. The communication with the remote nodes 99 can be directed from the control unit 50, or through a communication system onboard the vehicle 100. The communication can be through a wide various of networks, including but not limited to a packet data network such as a public network (e.g., the Internet) or a private network, and a mobile communication network (e.g., a WCDMA, LTE, or WiMAX network).

The cargo tracking system 15 uses both the wireless system 20 and the vision system 40 to identify the monitor the cargo 90 during loading and/or unloading. Figure 7 illustrates a method of identifying and tracking the cargo 90. The cargo 90 is initially identified through the wireless system 20 (block 200). The identification is based on the identification data emitted from the tag 21 that is received by one or more of the locators 25. The position of the cargo 90 is also tracked through the wireless system 20 (block 202). The tracking of the position occurs again through the data received from the tag 21, such as through an RSSI calculation from received signals at multiple locators 25. The cargo tracking system 15 also provides for the vision system 40 to track the position of the cargo 90 (block 204).

In some examples, the vision system 40 provides for more accurate tracking than the wireless system 20. The wireless system 20 enables identification and coarse (or rough) positioning. In some examples, the wireless system enables coarse positioning in a range of 1 to 15 meters. In some examples, the wireless system enables coarse positioning in a range of 2 to 15 meters. In some examples, the wireless system enables coarse positioning in a range of 1 to 5 meters. In some examples, the wireless system enables coarse positioning in a range of 1 to 3 meters. With the cargo 90 identified and the rough position known, the more precise movement and position of the cargo 90 is enabled through the vision system 40. In some examples, the vision system 40 is used to determine the final position within a cargo hold 103. The final position is determined as the position where the cargo 90 is positioned when the cargo 90 is determined to have stopped moving. In some examples, the cargo is determined to have stopped moving when the cargo is determined to have stopped moving during a period of at least 10s. In some examples, the cargo is determined to have stopped moving when the cargo is determined to have stopped moving during a period of at least 20s. In some examples, the cargo is determined to have stopped moving when the cargo is determined to have stopped moving during a period of at least 30s. In some examples, the cargo is determined to have stopped moving when the cargo is determined to have stopped moving during a period of at least 40s.

In some examples, tracking of the cargo 90 occurs simultaneously by both the wireless system 20 and the vision system 40. The wireless system 20 enables initially identifying the cargo 90 and determining a relatively coarse position. The control unit 50 is then able to analyze the images received from one or more cameras 41 to track the further movement of the cargo 90.

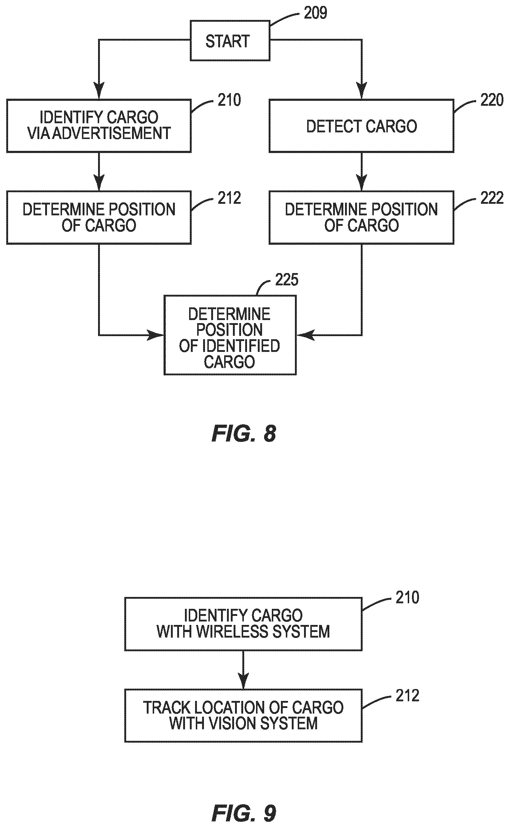

Figure 8 illustrates a method with the position of the cargo 90 simultaneously tracked by both the wireless system 20 and the vision system 40. The process starts (block 209) with the cargo 90 identified based on the data emitted from the tag 21 (block 210). The position of the cargo 90 is also determined based on the location of the tag 21 that is received by one or more locators 25 (block 212). Simultaneously with the wireless system 20, the vision system 40 tracks the cargo 90. The cargo is detected in the images (block 220) and the position of the cargo is determined based on the images (block 222). In some examples, the control unit 50 initially determines the position of the cargo 90 through the wireless system 20. Once the position is roughly known, the control unit 50 analyzes images from cameras 41 with a field of view that includes the rough position. The control unit 50 is then able to more specifically determine the position of the cargo 90 based on the images. In some examples, the images are not analyzed until the cargo 90 has been identified through the wireless system 20. In other examples, the images are analyzed prior to the identification through the wireless system 20.

The method continues with the position of the cargo 90 based on the determined positions from the wireless system 20 and the vision system 40 (block 225). In some examples, the position is monitored by both in the event that one of the systems 20, 40 is not able to determine the position. This could occur in various situations, such as but not limited to the locators 25 failing to receive a signal from the tag 21, and the images failing to include the cargo 90 such as when one or more of the cameras 41 are blocked. In some examples, the position of the cargo (block 225) is determined based on the vision system 40 because it is generally a more accurate system. In some examples, the position of the cargo 90 is based on a combination of the positions determined by both systems 20, 40 (e.g., an average position).

In some examples, the positioning enabled by the vision system (i.e. based on the images) is at least one order of magnitude more precise than the positioning enabled by the wireless system (i.e. based on the wireless signals).

In some examples, the wireless system 20 and vision system 40 work in series. One method in Figure 9 includes identifying the cargo 90 using the wireless system 20 (block 210). The position of the cargo 90 is also determined using the wireless system 20. Once the cargo 90 is identified and initially located, the position of the cargo 90 is tracked using the vision system 40 (block 212). The initial position determined through the wireless system 20 enables the control unit 50 to locate the cargo 90 in the images. Afterwards, the control unit 50 uses just the vision system 40 to track the position.

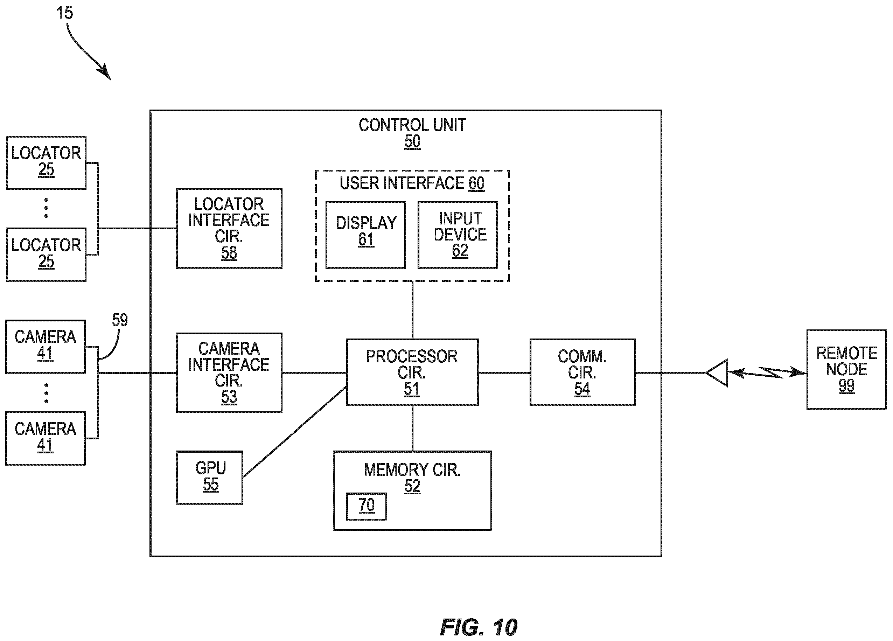

Figure 10 illustrates an example of a control unit 50 that includes processing circuitry 51, memory circuitry 52, camera interface circuitry 53, locator interface circuitry 58, and communication circuitry 54. The processing circuitry 51 controls overall operation of the cargo tracking system 15 according to program instructions stored in the memory circuitry 52. The processing circuitry 51 can include one or more circuits, microcontrollers, microprocessors, hardware, or a combination thereof. The processing circuitry 51 can include various amounts of computing power to provide for the needed functionality.

Memory circuitry 52 includes a non-transitory computer readable storage medium storing the program instructions, such as a computer program product, that configures the processing circuitry 51 to implement one or more of the techniques discussed herein. Memory circuitry 52 can include various memory devices such as, for example, read-only memory, and flash memory. Memory circuitry 52 can be a separate component as illustrated in Figure 10 or can be incorporated with the processing circuitry 51. Alternatively, the processing circuitry 51 can omit the memory circuitry 52, e.g., according to at least some embodiments in which the processing circuitry 51 is dedicated and non-programmable. Memory circuitry 52 is configured to support loading of the images into a runtime memory for real time processing and storage. In one example, the memory circuitry 52 includes a solid state device (SSD).

The control unit 50 includes a graphics processing unit (GPU) 55. The GPU 55 is a specialized electronic circuit designed to manipulate and alter the memory circuitry 52 to accelerate the creation of images in a frame buffer intended for output. The GPU 55 can include various amounts of computing power to provide the needed functionality. In one example, the GPU 55 has greater than 1 teraflops of computing power. This processing capability provides for large scale machine learning. In one example, the computing device 50 includes a separate GPU 55. In another example, this processing is performed at the processing circuitry 51.

The memory circuitry 52 is configured to store a record 70 of the cargo 90. The record 70 includes the identification data on the cargo 90 including but not limited to an identification alphanumeric code, a name, owner, volume, contents, origination point, destination point, and loading location on the vehicle 90.

Camera interface circuitry 53 provides for receiving the images from the cameras 41. The camera interface circuitry 53 can provide for one-way communications from the cameras 41 or two-way communications that are both to and from the cameras 41. Locator interface circuitry 58 provides for receiving the identification data from the locators 25. The locator interface circuitry 58 can be configured for one-way or two-way communication.

Communication circuitry 54 provides for communications to and from the control unit 50. The communications can include communications with other circuitry on the vehicle 100 (e.g., vehicle control system) and/or communications with a remote node 99. Communication circuitry 54 provides for sending and receiving data with remote nodes 99.

A user interface 60 provides for a user to access data about the cargo 90. The user interface 60 includes one or more input devices 62 such as but not limited to a keypad, touchpad, roller ball, and joystick. The user interface 60 also includes one or more displays 61 for displaying information to regarding the cargo 90 and/or for an operator to enter commands to the processing circuitry 51.

In some examples, the control unit 50 operates autonomously to process the identification data and images. This autonomous ability minimizes and/or eliminates operator intervention which could slow the process and/or create errors.

The cargo tracking system 15 can used on a variety of vehicles 100 including but not limited to trucks, trains, ships, and aircraft. The cargo tracking system 15 can also be used in other contexts. Examples include but are not limited to warehouses, airport loading facilities, and distribution centers.

In some examples, the images include a time stamp indicating the time at which the image was captured. The time stamp can be applied by the camera 41 or the control unit 50. The time stamp can be used by the control unit 50 to track the movement of the cargo 90 and the different images that are captured by the cameras 41.

In some examples, tracking the location of the cargo 90 uses a heat map. This functioning includes a tag 21 attached to the cargo 90 with the tag 21 configured to emit a signal. The signals are received by one or more locators 25 to form a heat map of the general location of the cargo 90. The heat map is used to narrow down the location of the cargo 90. Once the general location is known through the heat map, one or more other systems (e.g., vision system 40, perception, aural) are used to determine a more specific location.

Additionally information about the cargo tracking system 15 is disclosed in Exhibit A.

By the term "substantially" with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

The present invention may be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

Further examples are provided in the form of numbered examples:
Example 1. A method of tracking cargo, the method comprising:
   receiving wireless signals from a tag on the cargo;
   identifying the cargo based on the wireless signals;
   determining a position of the cargo based on the wireless signals; and
   capturing images of the cargo over a period of time and monitoring a position of the cargo based on the images as the cargo moves through an area.
Example 2. The method of example 1, further comprising attaching the tag to the cargo prior to receiving the wireless signals from the tag on the cargo.
Example 3. The method of example 1 or 2, further comprising capturing the images of the cargo after determining the position of the cargo based on the wireless signals.
Example 4. The method of any of examples 1 to 3, further comprising identifying the cargo based on identification data that is contained in the wireless signals.
Example 5. The method of any of examples 1 to 4, further comprising simultaneously monitoring the position of the cargo based on the wireless signals and based on the images.
Example 6. The method of any of examples 1 to 5, further comprising:
   based on the images, determining that the cargo has stopped moving within the area; and
   determining a final position of the cargo as a point where the cargo is located when the cargo stops moving.
Example 7. The method of any of examples 1 to 6, further comprising identifying the cargo and determining the position of the cargo while the cargo is being loaded onto an aircraft.
Example 8. The method of any of examples 1 to 7, further comprising receiving the wireless signals at the plurality of locators and determining the position of the cargo based on a received signal strength of the wireless signals at the plurality of locators.
Example 9. A method of tracking cargo that is being loaded onto a vehicle, the method comprising:
   receiving wireless signals at one or more of a plurality of locators with the wireless signals being emitted from a tag that is attached to the cargo;
   identifying the cargo based on the wireless signals;
   receiving the wireless signals at the plurality of locators as the cargo is moving in the vehicle and tracking a position of the cargo based on the wireless signals;
   capturing images of the cargo as the cargo is moving in the vehicle; and
   tracking the position of the cargo within the vehicle based on the images.
Example 10. The method of example 9, further comprising receiving the wireless signals at the plurality of locators and determining the position of the cargo based on a received signal strength of the wireless signals at the plurality of locators.
Example 11. The method of any of examples 9 or 10, further comprising receiving the wireless signals at the plurality of locators that are mounted at fixed locations to the vehicle.
Example 12. The method of any of examples 9 to 11, wherein receiving the wireless signals at the one or more of a plurality of locators comprises receiving a Bluetooth Low Energy signal that is transmitted from a BLE tag attached to the cargo.
Example 13. The method of any of examples 9 to 12, further comprising identifying a point on the cargo based on the images and tracking the position of the cargo based on the point identified in the images.
Example 14. The method of any of examples 9 to 13, further comprising:
   identifying a leading edge of the cargo based on the images; and
   tracking the leading edge of the cargo as the cargo moves within the vehicle.
Example 15. A cargo tracking system comprising:
   a wireless system comprising:
   tags configured to be connected to the cargo and configured to emit identification data; and
   locators configured to be connected to the vehicle and configured to receive the identification data emitted from the tags;
   a vision system comprising a plurality of cameras positioned in the vehicle and configured to capture images of the cargo;
   a control unit comprises processing circuitry configured to:
      identify the cargo and track a position of the cargo based on signals transmitted from the tag and received by the locators; and
      track the position of the cargo based on the images captured by the vision system.
Example 16. The cargo tracking system of example 15, wherein the wireless system is a Bluetooth Low Energy system.
Example 17. The cargo tracking system of example 15 or of example 16, wherein the control unit is configured to initially identify the cargo and the position of the cargo based on the identification data received by one or more of the locators, and then track the position of the cargo based on the images captured by the vision system.
Example 18. The cargo tracking system of any of examples 15 to 17, wherein the control unit is configured to start capturing the images of the cargo after the location of the cargo is determined by the wireless system.
Example 19. The cargo tracking system of any of examples 15 to 18, wherein the cameras are located at fixed positions within the vehicle.
Example 20. The cargo tracking system of any of examples 15 to 19, wherein the wireless system is configured to determine the position of the cargo based on a received signal strength of the wireless signals at the plurality of locators.

## Claims

1. A method of tracking cargo (90), the method comprising:
receiving wireless signals from a tag (21) on the cargo;
identifying the cargo based on the wireless signals;
determining a position of the cargo based on the wireless signals; and
capturing images of the cargo over a period of time and monitoring a position of the cargo based on the images as the cargo moves through an area.

2. The method of claim 1, further comprising attaching the tag to the cargo prior to receiving the wireless signals from the tag on the cargo.

3. The method of any of the above claims, further comprising capturing the images of the cargo after determining the position of the cargo based on the wireless signals.

4. The method of any of the above claims, further comprising identifying the cargo based on identification data that is contained in the wireless signals.

5. The method of any of the above claims, further comprising simultaneously monitoring the position of the cargo based on the wireless signals and based on the images.

6. The method of any of the above claims, further comprising:
based on the images, determining that the cargo has stopped moving within the area; and
determining a final position of the cargo as a point where the cargo is located when the cargo stops moving.

7. The method of any of the above claims, further comprising identifying the cargo and determining the position of the cargo while the cargo is being loaded onto an aircraft.

8. The method of any of the above claims, further comprising receiving the wireless signals at a plurality of locators (25) and determining the position of the cargo based on a received signal strength of the wireless signals at the plurality of locators.

9. The method of tracking cargo (90) according to claim 1, whereby the cargo is being loaded onto a vehicle, the method comprising:
receiving the wireless signals emitted from the tag at one or more of a plurality of locators (25), whereby the tag (21) is attached to the cargo;
receiving the wireless signals at the plurality of locators as the cargo is moving through the area in the vehicle to determine the position of the cargo 90 based on the wireless signals.

10. The method of claim 9, further comprising receiving the wireless signals at the plurality of locators and determining the position of the cargo based on a received signal strength of the wireless signals at the plurality of locators.

11. The method of any of claims 9 or 10, further comprising receiving the wireless signals at the plurality of locators that are mounted at fixed locations to the vehicle.

12. The method of any of claims 9 to 11, wherein receiving the wireless signals at the one or more of a plurality of locators comprises receiving a Bluetooth Low Energy, BLE, signal that is transmitted from a BLE tag attached to the cargo.

13. The method of any of claims 9 to 12, further comprising identifying a point on the cargo based on the images and tracking the position of the cargo based on the point identified in the images.

14. The method of any of claims 9 to 13, further comprising:
identifying a leading edge of the cargo based on the images; and
tracking the leading edge of the cargo as the cargo moves within the vehicle.

15. A cargo tracking system comprising:
a wireless system (20) comprising:
tags (21) configured to be connected to the cargo (90) and configured to emit wireless signals comprising identification data; and
locators (25) configured to be connected to the vehicle and configured to receive the identification data emitted from the tags;
a vision system (40) comprising a plurality of cameras positioned in the vehicle and configured to capture images of the cargo;
a control unit (50) comprises processing circuitry (51) configured to operate the wireless system and the vision system according to any of the above claims.
